# EUROPEAN PATENT APPLICATION

(11) **EP 3 805 654 A1**
(43) Date of publication of application: **14.04.2021**
(21) Application number: 19812093.3
(22) Date of filing: 21.05.2019
(51) Int. Cl.: F24F 11/58, F24F 11/32, H04Q 9/00

(54) **AIR CONDITIONING MANAGEMENT SYSTEM AND COMMUNICATION CONTROL DEVICE**

(30) Priority: 31.05.2018 JP 2018104938
(71) Applicant: DAIKIN INDUSTRIES, LTD., Osaka 530-8323 (JP)
(72) Inventor: MIZUNO, Hideki, Osaka-shi, Osaka 530-8323 (JP); KITADE, Yukio, Osaka-shi, Osaka 530-8323 (JP); OGISO, Yuuki, Osaka-shi, Osaka 530-8323 (JP)
(74) Representative: Hoffmann Eitle
(86) International application number: PCT/JP2019/020016
(87) International publication number: WO 2019/230487

(57) **Abstract**

An air conditioning management system includes an air conditioner (11), a communication control device (12) configured to acquire and transmit operation data of the air conditioner (11), and an information management device (13) configured to receive the operation data transmitted from the communication control device (12) via a network (50), in which the communication control device (12) has a communication module (42) configured to transmit the operation data by specified low power wireless communication, and a transmission control unit (47) configured to select only a predetermined item from the operation data of a plurality of items acquired from the air conditioner (11) and cause the communication module (42) to transmit the predetermined item.

## Description

### TECHNICAL FIELD

The present disclosure relates to an air conditioning management system and a communication control device.

### BACKGROUND ART

Patent Literature 1 discloses a facility equipment control system including an air conditioner having an indoor unit and an outdoor unit, a station (facility equipment control device) connected to the outdoor unit by a communication line and disposed in, for example, a management room of a building, and a management device connected to the station by a communication channel and managing the air conditioner.

The outdoor unit of the air conditioner is provided with a discharge pipe temperature sensor, a discharge pressure sensor, a suction pressure sensor, and the like of a compressor. The indoor unit is provided with an indoor temperature sensor and the like. Operation data including data detected by these sensors, control content of the air conditioner, and presence or absence of an abnormality are transmitted to the station at predetermined time intervals and stored in a storage unit of the station. Further, the station collectively transmits the operation data for one day stored in the storage unit to the management device every day.

### CITATION LIST

### [PATENT LITERATURE]

Patent Literature 1: Japanese Patent No. 3731120

### SUMMARY OF INVENTION

### TECHNICAL PROBLEM

In recent years, with a spread of Internet of Things (IoT), specified low power wireless communication called a low power wide area (LPWA) has been widespread. Although having a small communication volume and a low communication speed, the LPWA allows communication with low power consumption and low charge and allows a facility to be installed easily and inexpensively. Therefore, if utilized in a management field of air conditioners, the LPWA will be of great merit not only to users but also to manufacturers and management companies.

However, the operation data used for managing air conditioners is enormous, and it is therefore extremely difficult to adopt the LPWA in a conventional management system.

An object of the present disclosure is to provide an air conditioning management system and a communication control device that enable remote management of operation data using specified low power wireless communication.

### SOLUTION TO PROBLEM

(1) An air conditioning management system of the present disclosure includes an air conditioner, a communication control device configured to acquire and transmit operation data of the air conditioner, and an information management device configured to receive the operation data transmitted from the communication control device via a network, in which the communication control device includes a communication module configured to transmit the operation data by specified low power wireless communication, and a transmission control unit configured to select only a predetermined item from the operation data of a plurality of items acquired from the air conditioner and cause the communication module to transmit the predetermined item.
   The air conditioning management system having the above configuration does not transmit a huge amount of operation data in the air conditioner to the information management device, but transmits only the operation data of a predetermined item to the information management device, and can transmit the operation data using specified low power wireless communication.
(2) Preferably, the transmission control unit causes the communication module to transmit operation data of an item according to a purpose of use of the operation data.
   In this configuration, the operation data of a predetermined item only for a specific purpose of use can be transmitted to the information management device, and thus the information management device can manage the operation data according to the specific purpose of use with a small communication volume.
(3) Preferably, the transmission control unit causes the communication module to transmit operation data of an item according to at least one purpose of use selected from a plurality of purposes of use.
   This configuration allows the information management device to manage the operation data according to the purpose of use selected by a request of the user from the plurality of purposes of use.
(4) Preferably, the purpose of use relates to at least one of refrigerant leakage detection, improvement of energy conservation, equipment life, or abnormality detection.
(5) Preferably, the transmission control unit causes the communication module to transmit the operation data of a predetermined item once a day.
   This configuration can reduce the daily communication volume.
(6) Preferably, the transmission control unit causes the communication module to transmit one piece of representative operation data for one item per day.
   This configuration can further reduce the daily communication volume.
(7) Preferably, the transmission control unit causes the communication module to transmit the operation data of the plurality of items separately over a plurality of days in accordance with a daily communication data limit.
   In this configuration, for example, when there is a plurality of items that does not need to be transmitted every day, these items are transmitted separately over a plurality of days to reduce and keep the daily communication volume within the communication data limit.
(8) Preferably, when the purpose of use is related to abnormality detection, the transmission control unit causes the communication module to transmit operation data when an abnormality occurs.
   This configuration makes it possible to quickly respond to an abnormality.
(9) Preferably, the communication control device receives power supply from the air conditioner.
   This configuration allows the communication control device to be operated without power source supplied from outside.
(10) A communication control device of the present disclosure is configured to acquire operation data of an air conditioner and transmit the operation data to an information management device via a network, the communication control device including a communication module configured to transmit the operation data by specified low power wireless communication, and a transmission control unit configured to select only a predetermined item from the operation data of a plurality of items acquired from the air conditioner and cause the communication module to transmit the predetermined item.
   The communication control device having the above configuration does not transmit a huge amount of operation data in the air conditioner to the information management device, but transmits only the operation data of a predetermined item to the information management device, and therefore can transmit the operation data using specified low power wireless communication.

### BRIEF DESCRIPTION OF DRAWINGS

[FIG. 1] FIG. 1 is a schematic configuration diagram of an air conditioning management system according to one embodiment.
[FIG. 2] FIG. 2 is a schematic configuration diagram showing a refrigerant circuit of an air conditioner.
[FIG. 3] FIG. 3 is a schematic configuration diagram showing a communication system of the air conditioner.
[FIG. 4] FIG. 4 is a schematic configuration diagram of a communication control device.
[FIG. 5A] FIG. 5A is a diagram illustrating format conversion of operation data.
[FIG. 5B] FIG. 5B is a diagram illustrating format conversion of operation data.
[FIG. 6] FIG. 6 is a diagram illustrating selection of a transmission item of the operation data.
[FIG. 7] FIG. 7 is a flowchart showing an operation procedure of the communication control device.

### DESCRIPTION OF EMBODIMENTS

An embodiment of an air conditioning management system will be described in detail below with reference to the accompanying drawings.

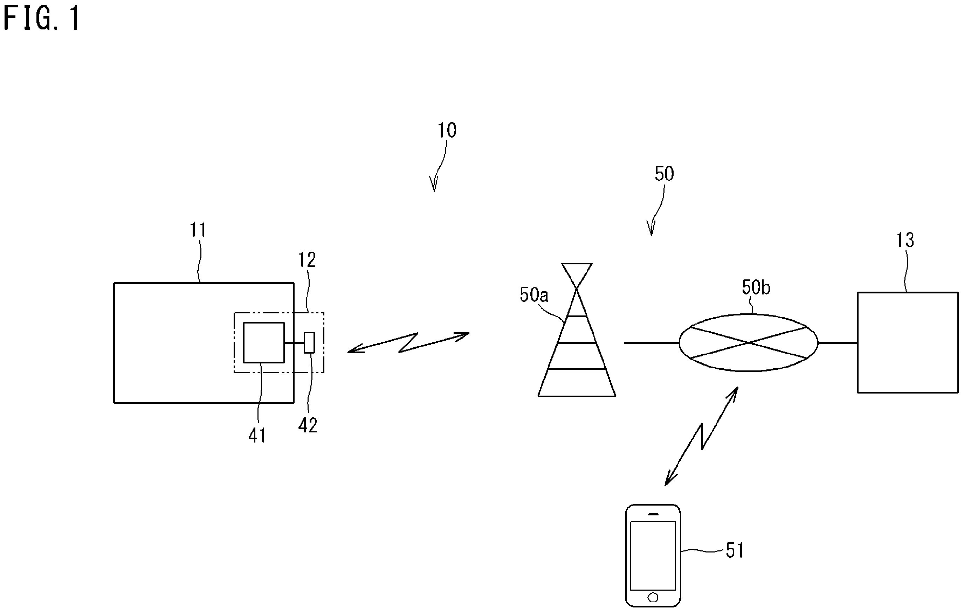

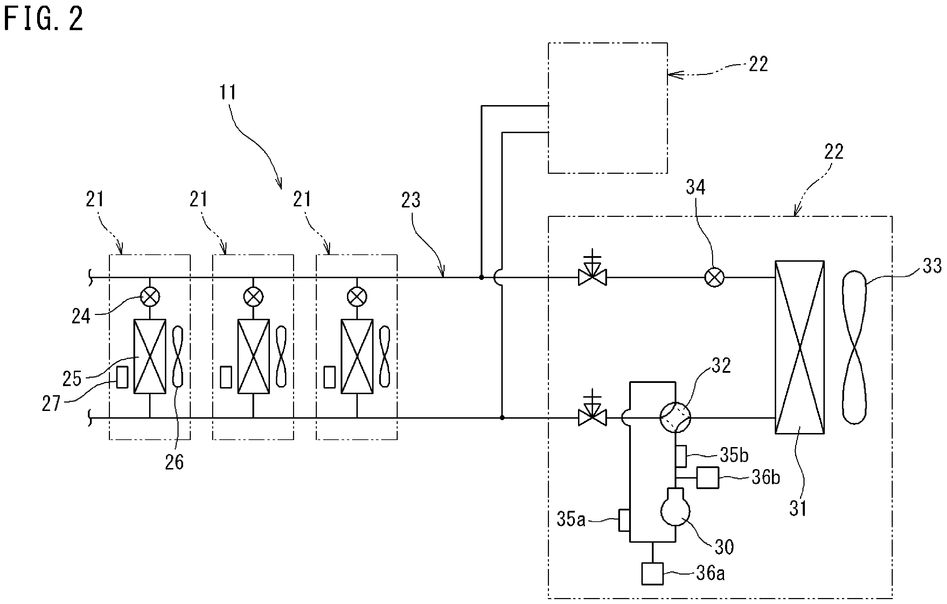

FIG. 1 is a schematic configuration diagram of an air conditioning management system according to one embodiment. FIG. 2 is a schematic configuration diagram showing a refrigerant circuit of an air conditioner 11.

As shown in FIG. 1, an air conditioning management system 10 according to the present embodiment includes the air conditioner 11, a communication control device 12, and an information management device 13. The communication control device 12 and the information management device 13 are connected by a network 50.

### [Air conditioner]

As shown in FIG. 2, the air conditioner 11 according to the present embodiment is a separate type including an indoor unit 21 and an outdoor unit 22. Specifically, the air conditioner 11 is a multi-type air conditioner in which a plurality of indoor units 21 is connected to one or a plurality of (two in the illustrated example) outdoor units 22.

### (Configuration of refrigerant circuit)

The indoor unit 21 and the outdoor unit 22 are connected to each other via a refrigerant pipe 23. The refrigerant circuit that performs a vapor compression refrigeration cycle is configured by circulating a refrigerant flowing through the refrigerant pipe 23. The indoor unit 21 includes an indoor expansion valve 24, an indoor heat exchanger 25, and an indoor fan 26. As the indoor expansion valve 24, an electric expansion valve capable of adjusting a refrigerant pressure and a refrigerant flow rate is used.

The indoor heat exchanger 25 is, for example, a cross fin tube type heat exchanger, and is used for exchanging heat with indoor air.

The indoor fan 26 is configured to take indoor air into the indoor unit 21, exchange heat between the taken-in air and the indoor heat exchanger 25, and then blow the air into the room. The indoor fan 26 includes a motor whose number of rotations can be adjusted by inverter control.

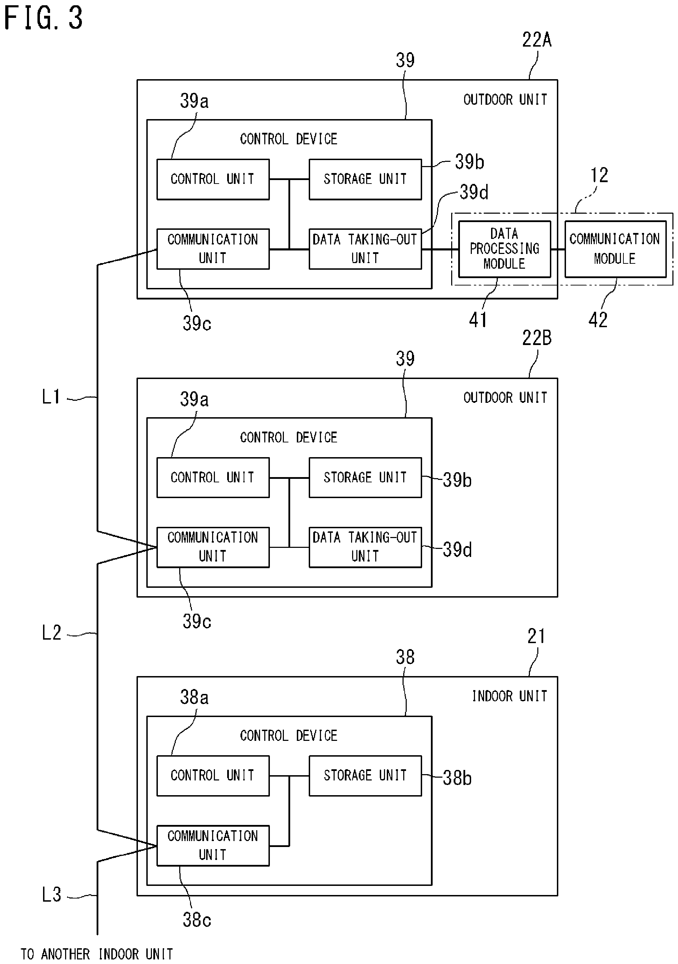

The indoor unit 21 is further provided with various sensors. For example, the indoor unit 21 includes a suction temperature sensor 27. The suction temperature sensor 27 detects a temperature of the air taken into the indoor unit 21 by the indoor fan 26. The temperature detected by the suction temperature sensor 27 is input to a control device 38 (see FIG. 3) described later.

Operations of the indoor expansion valve 24 and the indoor fan 26 are controlled by the control device 38 in accordance with on and off operations of an operation switch of the air conditioner 11 and output of the sensors.

The outdoor unit 22 includes a compressor 30, an outdoor heat exchanger 31, a four-way switching valve 32, an outdoor fan 33, and an outdoor expansion valve 34. The compressor 30 is of a variable displacement type (variable capacity type), and can change the number of rotations of a built-in motor by controlling the motor with an inverter. The compressor 30 may be of a constant capacity type. Further, a plurality of compressors 30 may be provided. In this case, compressors of a variable displacement type and compressors of a constant capacity type may coexist.

The outdoor heat exchanger 31 is, for example, a cross fin tube type heat exchanger, and is used for exchanging heat with a refrigerant by using air as a heat source.

The outdoor fan 33 includes a motor whose number of rotations can be adjusted by inverter control. The outdoor fan 33 is configured to take in the outdoor air inside the outdoor unit 22, exchange heat between the taken-in air and the outdoor heat exchanger 31, and then blow the air out of the outdoor unit 22.

The four-way switching valve 32 reverses a flow of the refrigerant in the refrigerant pipe 23, and supplies the refrigerant discharged from the compressor 30 by switching between the outdoor heat exchanger 31 and the indoor heat exchanger 25. As a result, the air conditioner 11 can switch between a cooling operation and a heating operation.

The outdoor unit 22 is further provided with various sensors. For example, the outdoor unit 22 includes temperature sensors 35a and 35b and pressure sensors 36a and 36b. The temperature sensors 35a and 35b include a suction pipe temperature sensor 35a provided in a suction pipe of the compressor 30 and a discharge pipe temperature sensor 35b provided in a discharge pipe. The pressure sensors 36a and 36b include a low pressure sensor 36a provided on a suction side of the compressor 30 and a high pressure sensor 36b provided on a discharge side of the compressor 30. Further, temperature sensors may be provided to measure temperatures on a gas side and a liquid side of the outdoor heat exchanger 31.

Signals detected by the sensors 35a, 35b, 36a, and 36b are input to the control device 39 (see FIG. 3) described later.

Operations of the outdoor expansion valve 34, the outdoor fan 33, and the compressor 30 are controlled by the control device 39 in accordance with output of the sensors.

### (Configuration of communication system)

FIG. 3 is a schematic configuration diagram showing a communication system of the air conditioner. FIG. 3 shows an example in which a plurality of (two) outdoor units 22A and 22B and a plurality of indoor units 21 are connected. The outdoor units 22A and 22B each include a control device 39 that controls operations of internal equipment and the like. Each control device 39 is configured by a control board on which various electronic components are mounted, and includes a control unit 39a including an arithmetic unit such as a CPU, a storage unit 39b including RAM, ROM, flash memory, and the like, a communication unit 39c including a communication interface, and a data taking-out unit 39d. The control board configuring the control device 39 is disposed in an electrical component box provided in a housing of each of the outdoor units 22A and 22B. In the present embodiment, the communication control device 12 is connected to the data taking-out unit 39d of one outdoor unit 22A of the plurality of outdoor units 22A and 22B.

The indoor unit 21 includes the control device 38 that controls the operations of the internal equipment and the like. Each control device 38 includes a control unit 38a including an arithmetic unit such as a CPU, a storage unit 38b including RAM, ROM, flash memory, and the like, and a communication unit 38c including a communication interface.

The communication unit 39c of the outdoor unit 22A and the communication unit 39c of the outdoor unit 22B are connected to each other via a communication line L1 to be communicable with each other. Further, the communication unit 39c of the outdoor unit 22B and the communication unit 38c of the indoor unit 21 are connected to each other via a communication line L2 to be communicable with each other, and the communication unit 38c of the indoor unit 21 and the communication unit of another indoor unit are connected via a communication line L3 to be communicable with each other.

The communication units 39c of the outdoor units 22A and 22B and the communication units 38c of the indoor unit 21 transmit and receive information stored in the storage units 38b and 39b in accordance with instructions of the control units 39a of the outdoor units 22A and 22B and the control unit 38a of the indoor unit 21 between the indoor unit 21 and the outdoor units 22A and 22B, between the plurality of indoor units 21, and between the plurality of outdoor units 22A and 22B.

Detection signals detected by the sensors 27, 35a, 35b, 36a, and 36b (see FIG. 2) provided in the indoor unit 21 and the outdoor unit 22 are input to the control devices 38 and 39 and stored in the storage units 38b and 39b, respectively.

In addition to the detection signals input from the sensors 27, 35a, 35b, 36a, and 36b, the storage units 38b and 39b store "setting data" such as operating modes of heating and cooling, target values of evaporation temperature and condensation temperature, "control data" such as operating time of the air conditioner 11, the number of rotations of the compressor 30 and the fans 26 and 33, opening degrees of the expansion valves 24 and 34, and "abnormality data" such as an abnormality code upon occurrence of an abnormality during the operation. In the present embodiment, these data are collectively referred to as operation data.

Further, the storage units 38b and 39b also store programs for operating the indoor unit 21 and the outdoor unit 22. The control units 38a and 39a control the operations of various equipment by executing the programs stored in the storage units 38b and 39b. For example, the control units 38a and 39a obtain control data such as the number of rotations of the compressor 30, the number of rotations of the fans 26 and 33, and the opening degrees of the expansion valves 24 and 34 by calculation so as to maintain an air conditioning environment such as the temperature and humidity desired by the user, and control the operation of the equipment.

Further, the operation data of the other outdoor unit 22B and the indoor unit 21, that is, the detection signal of the sensors, the setting data, the control data, the abnormality data, and the like is transmitted to the control device 39 of the outdoor unit 22A to which the communication control device 12 is connected, and is stored in the storage unit 39b. The operation data is stored in the storage unit 39b in accordance with a predetermined format. That is, the operation data is stored in accordance with a form in which types of items (for example, a discharge pressure (high pressure), a suction pressure (low pressure), a suction pipe temperature, and a discharge pipe temperature of the compressor 30, and the like) and an order of the items are determined in advance.

The format of such operation data may differ depending on a model of the air conditioner 11. For example, the old-model air conditioner 11 and the new-model air conditioner 11 may have different numbers and types of sensors. Thus, the same format cannot be applied, and each model stores the operation data in a different format.

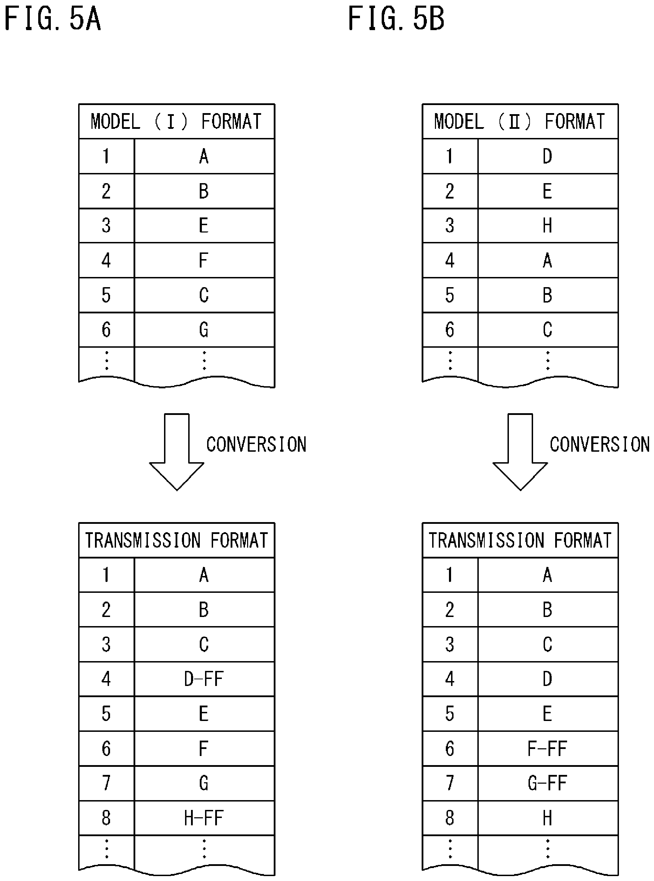

For example, the upper part of FIG. 5A exemplifies a format for a model (I), and the upper part of FIG. 5B exemplifies a format for a model (II) different from the model (I). The order of operation data is shown in the left column of each format, and operation data items A to H are shown in the right column. In this way, the formats that determine the types and the order of the stored items may not match between the different models (I) and (II).

The operation data of the outdoor units 22A and 22B and the indoor unit 21 stored in the storage unit 39b of the outdoor unit 22A in a predetermined format is transmitted from the outdoor unit 22A to the communication control device 12 as described later in accordance with a data transmission request signal transmitted from the communication control device 12 to the outdoor unit 22A.

As another example from the above, a form may be adopted in which the operation data stored in the storage units 39b and 38b of the outdoor units 22A and 22B and the indoor unit 21 in a predetermined format is transmitted to the communication control device 12 in accordance with the data transmission request signal transmitted from the communication control device 12 to the outdoor units 22A and 22B and the indoor unit 21.

Each data taking-out unit 39d of the outdoor units 22A and 22B is a general-purpose interface provided for reading various data stored in the storage unit 39b to the outside. This data taking-out unit 39d is used for connecting a personal computer (PC) to the air conditioner 11, for example, during a periodic inspection or repair and reading the operation data to the PC to recognize an operating state of the air conditioner 11. In the present embodiment, the communication control device 12 is connected to the data taking-out unit 39d, which is a general-purpose interface, and the operation data read from the air conditioner 11 to the communication control device 12 is transmitted to the information management device 13. This data taking-out unit 39d is mounted on the air conditioner 11 with the same specifications regardless of whether the model is old or new, and thus the communication control device 12 can be connected to the air conditioner 11 of any model.

### [Communication control device]

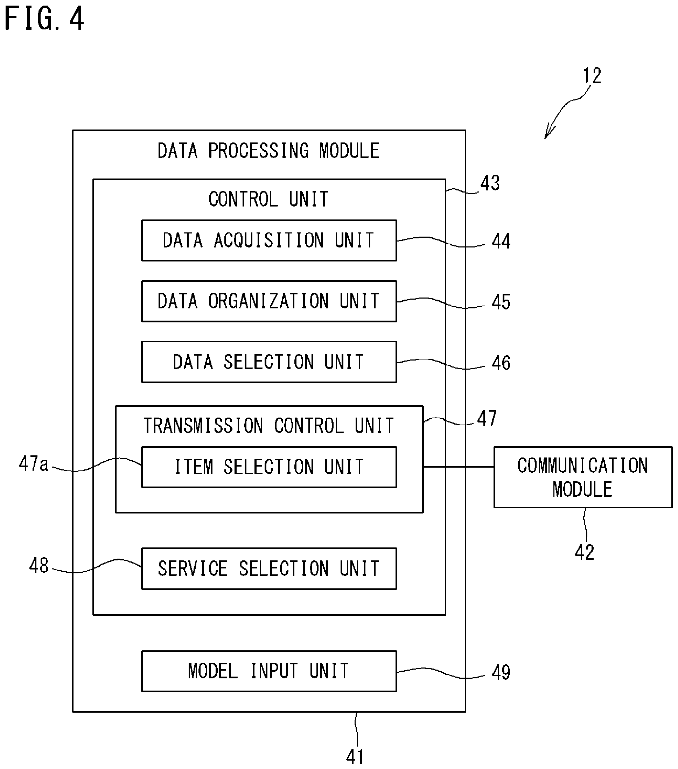

FIG. 4 is a schematic configuration diagram of the communication control device 12.

The communication control device 12 acquires operation data from the outdoor unit 22 and transmits the operation data to the information management device 13. The communication control device 12 is provided for one system of air conditioners 11 configuring one refrigerant circuit. Further, the communication control device 12 is attached not only to the newly installed air conditioner 11 but also to the existing air conditioner 11. The communication control device 12 has a data processing module 41 and a communication module 42.

### (Configuration of communication module 42)

The communication module 42 according to the present embodiment transmits the operation data using specified low power wireless communication called a low power wide area (LPWA). The communication module 42 is connected to the data processing module 41 by a communication line. This specified low power wireless communication achieves long-distance communication with low power consumption, unlike wireless communication methods in which high-speed communication is performed with relatively large power such as 3G lines and LTE lines provided by mobile phone operators.

For example, a SigFox network can be used as the LPWA. This SigFox network can communicate 12 bytes of data per a time at a communication speed of 100 bps up to 140 times a day (about 50 kB per month). Currently, the SigFox network can be used for about several hundred yen a year, and communication can be performed with extremely low power. However, the network is not limited to the SigFox network, and other specified low power wireless communication networks may be used.

The communication module 42 is provided at a position where communication with the outside is possible in the outdoor unit 22, for example, outside the housing of the outdoor unit 22. Further, the communication module 42 may be provided inside the housing of the outdoor unit 22 at a position where radio waves can be transmitted to and from the outside through an opening or the like. The communication module 42 can transmit the operation data to the information management device 13 via the network 50. The network 50 includes a base station 50a for the specified low power wireless communication and an Internet communication network 50b. Then, the operation data is transmitted from the communication module 42 to a server or the like of a network provider or the like via the base station 50a, and is transmitted from this server or the like to the information management device 13 via the Internet communication network 50b.

### (Configuration of data processing module 41)

The data processing module 41 includes a control unit 43 provided with a calculation unit such as a CPU and a storage unit such as RAM, ROM, and EEPROM, and various types of functions are achieved by the calculation unit executing an application program stored in the storage unit. Further, the data processing module 41 includes a model input unit 49 that receives input of the model of the air conditioner 11 connected to the data processing module 41. This model input unit 49 includes a DIP switch or the like provided on a board on which a CPU or the like is mounted. When the communication control device 12 is connected to the air conditioner 11, the model of the air conditioner 11 can be artificially input to the model input unit 49 by manual operations of a contractor or a maintenance contractor.

The model input unit 49 is not limited to a form of the DIP switch, and may adopt another form. For example, a form may be adopted where the model input unit 49 is provided with numerical value input keys (push buttons or the like) and a display unit that displays a one or multiple-digit numerical value by 7-segment display or the like, and a numerical value indicating the model input by a contractor with the input keys is displayed on the display unit. Alternatively, a form may be adopted where the model input unit 49 transmits a signal inquiring model information such as a model ID from the data processing module 41 to the outdoor unit 22 and the indoor unit 21, and the data processing module 41 receives the model information transmitted from the outdoor unit 22 and the indoor unit 21 that have received the signal to accept the input of the model. In this case, the model input unit 49 is configured by one function in the control unit 43 of the data processing module 41.

In the electrical component box of the outdoor unit 22, a space for installing an option board and a power supply port for supplying power source to the option board and the like are provided. The data processing module 41 of the communication control device 12 is installed in the space and is supplied with power from the power supply port. The communication module 42 may be supplied with power from the air conditioner 11 similarly to the data processing module 41 or may be supplied with power from a battery such as a dry battery. The communication module 42 according to the present embodiment, using the specified low power wireless communication, can be operated for a sufficiently long period of time even with a battery.

The control unit 43 of the data processing module 41 functionally includes a data acquisition unit 44, a data organization unit 45, a data selection unit 46, a transmission control unit 47, and a service selection unit 48. Each function will be described below.

### (Data acquisition unit 44)

The data acquisition unit 44 is a functional unit that acquires the operation data from the control device 39 of the outdoor unit 22. The data acquisition unit 44 periodically transmits a data transmission request signal to the control device 39 of the outdoor unit 22, and acquires the operation data transmitted from the control device 39 of the outdoor unit 22 that has received the signal. As described above, the operation data of the air conditioner 11 is stored in the storage unit 39b in accordance with the format determined for each model (see FIGS. 5A and 5B). In the data processing module 41 according to the present embodiment, the model input unit 49 receives input of the model in advance. Therefore, the data processing module 41 can recognize what format the operation data stored in the air conditioner 11 conforms to. Therefore, the data acquisition unit 44 can acquire the operation data after identifying what kind of item of the operation data is stored in what order.

### (Data organization unit 45)

The data organization unit 45 is a functional unit that sorts and organizes the operation data items acquired by the data acquisition unit 44 in accordance with a certain transmission format regardless of the model of the air conditioner 11. For example, as shown in lower parts of FIGS. 5A and 5B, the data organization unit 45 rearranges the operation data items acquired by the data acquisition unit 44 in a predetermined order from A to H. In this case, the fourth and eighth items D and H do not exist in the model (I), and the sixth and seventh items F and G do not exist in the model (II). The data organization unit 45 supplements information indicating that the operation data does not exist about the items having no operation data. In the example shown in FIGS. 5A and 5B, information indicated by "FF" is supplemented to the items without operation data.

### (Data selection unit 46)

The data selection unit 46 is a functional unit that selects a representative point for one day for the operation data organized by the data organization unit 45. The data acquisition unit 44 acquires the operation data from the air conditioner 11 at a predetermined timing, for example, every minute. If all the operation data acquired every minute is transmitted to the information management device 13, the communication volume will be enormous. In particular, the communication control device 12 according to the present embodiment performs communication using the specified low power wireless communication called the LPWA, and thus the possible communication amount per day is significantly small. Therefore, the data selection unit 46 selects the operation data to be transmitted to the information management device 13.

The data selection unit 46 according to the present embodiment selects one representative point per day for the operation data of each item. This representative point can be, for example, one point acquired during a time zone when the air conditioner 11 is stably operated, or one point acquired when an air conditioning load is high. The data selection unit 46 determines whether the operation data acquired by the data acquisition unit 44 satisfies a predetermined condition, and selects the most appropriate representative point. Note that a plurality of representative points for one day may be selected within a range not exceeding a communication data limit.

### (Transmission control unit 47)

The transmission control unit 47 is a functional unit that causes the communication module 42 to transmit the operation data organized by the data organization unit 45 and selected by the data selection unit 46. The transmission control unit 47 according to the present embodiment causes the communication module 42 to transmit the operation data once a day. Further, the transmission control unit 47 does not cause the communication module 42 to transmit the operation data of all the items acquired from the air conditioner 11 and selected by the data selection unit 46, but has an item selection unit 47a that causes the communication module 42 to select and transmit only the operation data of a predetermined item.

Specifically, the transmission control unit 47 according to the present embodiment causes the communication module 42 to transmit only the operation data of the items according to a predetermined purpose of use, for example, the items according to services provided to the users by a maintenance management company. In the present embodiment, the transmission control unit 47 is configured to provide services related to refrigerant leakage detection, equipment life, abnormality detection, and improvement of energy conservation as the purposes of use. Hereinafter, these services will be described.

The service related to refrigerant leakage detection is intended to comply with the "Act on Rational Use and Proper Management of Fluorocarbons" (the so-called CFC Emission Control Act). In this service, the operation data such as a state of the refrigerant during the operation of the air conditioner 11 is acquired and the operation data is managed by the information management device 13. Examples of the operation data include a refrigerant discharge pressure (or a condensation saturation temperature of the refrigerant), a refrigerant suction pressure (or an evaporation saturation temperature of the refrigerant), a discharge pipe temperature, and a suction pipe temperature of the compressor 30, and a heat exchanger temperature. The information management device 13 diagnoses presence or absence of leakage from changes in the operation data, and provides the information to the users, administrators, maintenance workers, manufacturers, and the like of the air conditioner 11.

The service related to the equipment life is a service intended to diagnose the life of various equipment in the air conditioner 11. The communication control device 12 acquires operation data such as operation time of the air conditioner 11 and operation time of the compressor 30 and the fans 26 and 33, and transmits the operation data to the information management device 13. The information management device 13 provides the users, administrators, maintenance workers, and the like with information such as the appropriate maintenance time on the basis of the received operation data.

The service related to abnormality detection is a service intended to monitor occurrence of an abnormality during the operation of the air conditioner 11. The communication control device 12 acquires the operation data related to an abnormality that has occurred in the air conditioner 11, for example, an abnormality code, abnormality occurrence time, an abnormality occurrence device, and the like, and transmits the operation data to the information management device 13. The information management device 13 provides the users, administrators, maintenance workers, and the like with information that an abnormality has occurred on the basis of the received operation data. Note that, unlike other operation data, the operation data related to abnormality detection is transmitted to the information management device 13 each time an abnormality occurs, and is provided to the users, administrators, maintenance workers, and the like. This makes it possible to promptly take measures such as repairs for abnormalities.

The service related to the improvement of energy conservation is intended to propose a reduction in energy consumption for operating the air conditioner 11. The communication control device 12 acquires operation data such as power consumption, operation time, and set temperature for the operation of the air conditioner 11, and transmits the operation data to the information management device 13. The information management device 13 provides the users, administrators, and the like with information on reduction in the energy consumption on the basis of the received operation data.

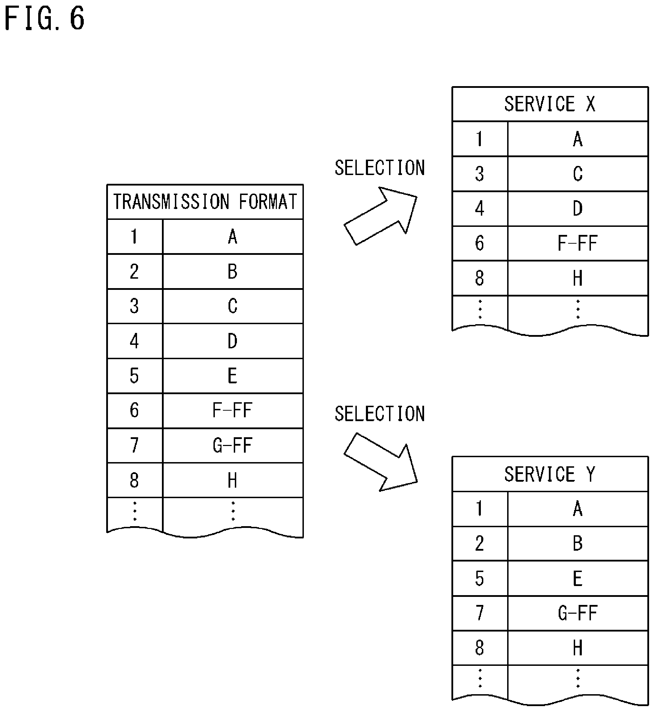

The item selection unit 47a of the transmission control unit 47 selects an operation data item in accordance with the service provided to the users and the like from the operation data organized by the data organization unit 45 and selected by the data selection unit 46, and transmits the operation data item to the information management device 13. For example, as shown in FIG. 6, the item selection unit 47a selects the items A, C, D, F, and H for a service X among the operation data items A to H organized in accordance with a transmission format, selects the items A, B, E, G, and H for a service Y, and causes the communication module 42 to transmit these items.

### (Service selection unit 48)

In addition to the four services (purposes of use) described above, the data processing module 41 holds information on other services (purposes of use) and operation data items according to these services. The data processing module 41 has the service selection unit 48 that receives input of a purpose of the actual use from among these purposes of use. Specifically, the service selection unit 48 receives input of a service desired by the user, for example, when the communication control device 12 is installed in the air conditioner 11. This input may be in a form of, for example, input with PC connection or input by a DIP switch or the like. However, after the communication control device 12 is installed, it is possible to additionally accept the selection of another service or change the service.

### (Operation procedure of communication control device 12)

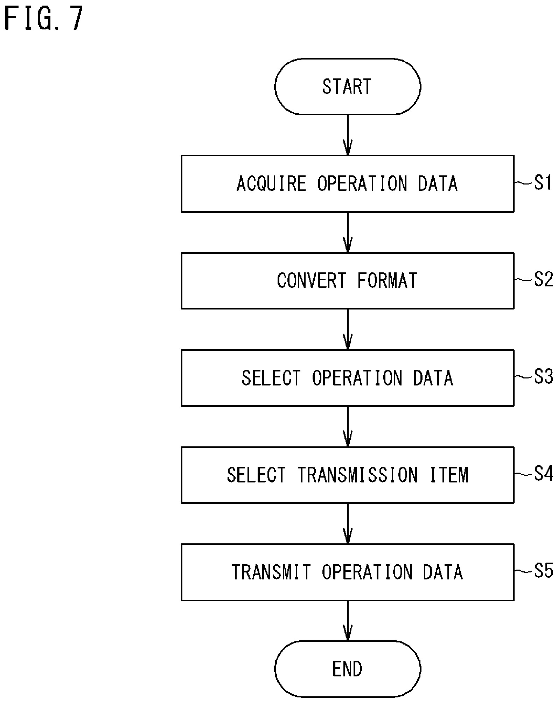

FIG. 7 is a flowchart showing an operation procedure of the communication control device 12.

Hereinafter, the procedure while the communication control device 12 acquires the operation data from the air conditioner 11 and transmits the operation data to the information management device 13 will be described. In step S1, the data processing module 41 of the communication control device 12 acquires various operation data from the air conditioner 11 by the function of the data acquisition unit 44.

Next, in step S2, the data processing module 41 converts the operation data acquired by the function of the data organization unit 45 from the format corresponding to the model of the air conditioner 11 to the transmission format for transmitting the operation data to the information management device 13. Through this processing, the operation data acquired from any model is organized in a common format.

Next, in step S3, the data processing module 41 selects operation data to be transmitted to the information management device 13 by the function of the data selection unit 46. Specifically, the operation data as one representative point per day is selected. This processing can reduce the communication volume of information transmitted to the information management device 13.

Then, the data processing module 41 selects an operation data item according to the service (purpose of use) provided to the user in step S4, and transmits the operation data of the item to the information management device 13 in step S5.

### [Information management device]

As shown in FIG. 1, the information management device 13 includes a personal computer or the like installed in a manufacturer of the air conditioner 11 or a management company that undertakes maintenance and inspection. The information management device 13 can accumulate and manage the information transmitted from the communication control device 12. In addition, the information management device 13 can provide the accumulated information to a terminal 51 used by the users, administrators, maintenance workers, manufacturers, and other parties involved in the air conditioner 11. Further, the information management device 13 can provide the terminal 51 with information about the state of the air conditioner 11 which can be recognized from the accumulated information, for example, a refrigerant leakage. Examples of the terminal 51 include a personal computer, a tablet PC, and a smartphone that can be connected to the information management device 13 via the Internet communication network 50b.

### [Operation and effect of embodiments]

The air conditioning management system 10 according to the present embodiment includes the air conditioner 11, the communication control device 12 configured to acquire and transmit operation data of the air conditioner 11, and the information management device 13 configured to receive the operation data transmitted from the communication control device 12 via the network 50, in which the communication control device 12 has the communication module 42 configured to transmit the operation data by the specified low power wireless communication, and the transmission control unit 47 configured to select only a predetermined item from the operation data of a plurality of items acquired from the air conditioner 11 and cause the communication module 42 to transmit the predetermined item. This configuration makes it possible to transmit only the operation data of a predetermined item to the information management device 13 instead of transmitting a huge amount of operation data in the air conditioner 11 to the information management device 13, and transmit the operation data using the specified low power wireless communication.

The transmission control unit 47 causes the communication module 42 to transmit operation data of an item according to a purpose of use (service to provide) of the operation data. Therefore, only the operation data of a predetermined item only for a specific purpose of use can be transmitted to the information management device 13, and thus the information management device 13 can manage the operation data according to the specific purpose of use with a small communication volume.

The transmission control unit 47 causes the communication module 42 to transmit operation data of an item according to at least one purpose of use selected from the plurality of purposes of use by the service selection unit 48 described above. This configuration allows the information management device 13 to manage the operation data according to the purpose of use selected by a request of the user from the plurality of purposes of use.

The transmission control unit 47 causes the communication module 42 to transmit the operation data of a predetermined item once a day. This can reduce the daily communication volume.

Further, the transmission control unit 47 causes the communication module 42 to transmit one piece of representative operation data for one item per day. This can further reduce the daily communication volume.

However, when the purpose of use is related to abnormality detection, the transmission control unit 47 causes the communication module 42 to transmit operation data when an abnormality occurs. This makes it possible to quickly respond to an abnormality.

The communication control device 12 receives power supply from the air conditioner 11, and thus can be operated without power source supplied from outside.

The air conditioning management system 10 according to the present embodiment includes the air conditioner 11, the communication control device 12 configured to acquire and transmit operation data of the air conditioner 11, and the information management device 13 configured to receive the operation data transmitted from the communication control device 12 via the network 50, in which the communication control device 12 has the model input unit 49 that receives input of the model of the air conditioner 11, the data organization unit 45 that converts the operation data acquired in a format corresponding to the model into a certain transmission format, and the communication module 42 that transmits the operation data converted in the transmission format.

In this configuration, even when the operation data is stored in a different format for each model of the air conditioner 11, the operation data is transmitted to the information management device 13 from any model in a unified format by being converted into a certain transmission format. Thus, the information management device 13 can manage the operation data without recognizing the model and converting the format. Further, the model can be recognized by the communication control device 12 without acquiring the model information by the air conditioner 11.

Not only the newly-installed new-model air conditioner 11 but also the existing old-model air conditioner 11 is required to comply with the CFC Emission Control Act. The air conditioning management system 10 according to the present embodiment can recognize formats of both the new and old models, and thus can be applied to any model.

When the operation data of the item included in the transmission format is not acquired by the air conditioner 11, the communication control device 12 supplements the information that the operation data of the item does not exist as shown in FIGS. 5A and 5B. In this configuration, when the operation data of the item included in the transmission format is not acquired by the air conditioner 11, the information management device 13 can recognize that there is no operation data of the item.

The communication control device 12 selects only items according to a predetermined purpose of use from the operation data converted into the transmission format and transmits the operation data to the information management device 13. This configuration can reduce the amount of operation data transmitted to the information management device 13 as much as possible, and reduce a communication cost.

The communication control device 12 is connected to the data taking-out unit 39d commonly provided in a plurality of models of the air conditioner 11. In this configuration, the communication control device 12 can be connected to the air conditioner 11 regardless of the model, and the operation data can be retrieved.

The communication control device 12 can be retrofitted to the existing air conditioner 11. Therefore, the air conditioning management system 10 can be applied to the existing air conditioner 11.

### [Other disclosures]

Note that the present disclosure is not limited to the above examples, but is indicated by the appended claims and is intended to include all modifications within the scope and meaning equivalent to those of the claims.

The transmission control unit 47 of the data processing module 41 may cause the communication module 42 to transmit the operation data of a plurality of items separately over a plurality of days in accordance with a daily communication data limit. For example, when there is a plurality of items to be transmitted once a plurality of days instead of every day, these items may be transmitted by the communication module 42 separately over the plurality of days. This can reduce and keep the daily communication volume within the communication data limit.

Further, the transmission control unit 47 is not limited to transmitting the operation data once a day, but may transmit the operation data separately several times a day.

As the purpose of use of the operation data, it is not necessary to adopt all the four purposes of use (refrigerant leakage detection, improvement of energy conservation, equipment life, and abnormality detection), but at least one of the four purposes of use may be adopted.

### REFERENCE SIGNS LIST

10: AIR CONDITIONING MANAGEMENT SYSTEM
11: AIR CONDITIONER
12: COMMUNICATION CONTROL DEVICE
13: INFORMATION MANAGEMENT DEVICE
42: COMMUNICATION MODULE
47: TRANSMISSION CONTROL UNIT
50: NETWORK

## Claims

1. An air conditioning management system comprising:
an air conditioner (11);
a communication control device (12) configured to acquire and transmit operation data of the air conditioner (11); and
an information management device (13) configured to receive the operation data transmitted from the communication control device (12) via a network (50),
wherein the communication control device (12) includes a communication module (42) configured to transmit the operation data by specified low power wireless communication, and a transmission control unit (47) configured to select only a predetermined item from the operation data of a plurality of items acquired from the air conditioner (11) and cause the communication module (42) to transmit the predetermined item.

2. The air conditioning management system according to claim 1, wherein the transmission control unit (47) causes the communication module (42) to transmit operation data of an item according to a purpose of use of the operation data.

3. The air conditioning management system according to claim 2, wherein the transmission control unit (47) causes the communication module (42) to transmit operation data of an item according to at least one purpose of use selected from a plurality of purposes of use.

4. The air conditioning management system according to claim 2 or 3, wherein the purpose of use relates to at least one of refrigerant leakage detection, improvement of energy conservation, equipment life, or abnormality detection.

5. The air conditioning management system according to any one of claims 1 to 4, wherein the transmission control unit (47) causes the communication module (42) to transmit the operation data of the predetermined item once a day.

6. The air conditioning management system according to any one of claims 1 to 5, wherein the transmission control unit (47) causes the communication module (42) to transmit one piece of representative operation data for one item per day.

7. The air conditioning management system according to any one of claims 1 to 4, wherein the transmission control unit (47) causes the communication module (42) to transmit the operation data of the plurality of items separately over a plurality of days in accordance with a daily communication data limit.

8. The air conditioning management system according to claim 4, wherein when the purpose of use is related to abnormality detection, the transmission control unit (47) causes the communication module (42) to transmit operation data when an abnormality occurs.

9. The air conditioning management system according to any one of claims 1 to 8, wherein the communication control device (12) is configured to receive power supply from the air conditioner (11).

10. A communication control device configured to acquire operation data of an air conditioner (11) and transmit the operation data to an information management device (13) via a network (50), the communication control device comprising:
a communication module (42) configured to transmit the operation data by specified low power wireless communication; and
a transmission control unit (47) configured to select only a predetermined item from the operation data of a plurality of items acquired from the air conditioner (11) and cause the communication module (42) to transmit the predetermined item.
